# EUROPEAN PATENT APPLICATION

(11) **EP 2 506 160 A1**
(43) Date of publication of application: **03.10.2012**
(21) Application number: 11002765.3
(22) Date of filing: 01.04.2011
(51) Int. Cl.: G06F 17/30

(54) **Unified data structures for scientific data information systems**

(71) Applicant: Waters Technologies Corporation, Milford, MA 01757 (US)
(72) Inventor: Lupu, Mihaela, Brasov 500439 (RO); Wintergalen, Andreas, Dr., 50529 Pulheim (DE)
(74) Representative: Vossius, Corinna

(57) **Abstract**

A computer-implemented method includes storing a plurality unified data structures within a data base of a scientific data information system. The unified data structures can include information corresponding to different data types.

## Description

### TECHNICAL FIELD

This disclosure relates to scientific data information systems, and in particular to unified data structures for scientific data information systems.

### BACKGROUND

Modem science-driven organizations, such as biotechnology and pharmaceutical companies, face intense scientific, regulatory, and business challenges. As both regulatory (e.g., GxP) scrutiny and scientific complexity increase, companies are often forced to demonstrate in even greater detail that their product (e.g., biologic/pharmaceutical product) is well-characterized and that their production process is well-controlled. For example, GxP compliance requires a system of administrative and information access controls, as well as audit trails of user activities and record alterations.

At the heart of the challenge of operating in a regulated (e.g., GxP) environment is a pressure to capture as much orthogonal information as possible during the development process and leverage it in manufacturing and quality control.

With the continual pressure to capture high-quality data, and do more with it, each functional area within a science-driven organization, and the organization as a whole, could benefit from being able to access and process captured data more efficiently.

### SUMMARY

In one aspect, the invention provides a computer-implemented method includes storing a plurality unified data structures within a data base of a scientific data information system. The unified data structures can include information corresponding to different data types.

Implementations may include one or more of the following features.

In some implementations, each unified data structure includes header information, data streams, structured XML based data and signatures.

In certain implementations, each unified data structure includes primary data elements and supporting data elements. The primary data elements can include an admin data element comprising basic fields, an instance data element comprising data specific to the unified data structure in XML form, a stream element comprising maintenance information concerning stored data streams, stream data comprising content of data streams, and a signature data element comprising electronic/digital signatures applied on the unified data structure. The supporting data elements can include a catalog comprising redundant searchable data extracted from the instance data element, comments comprising file attachments, hyperlinks to external data sources and/or to other ones of the unified data structures, search keywords, and thumbnails comprising renditions of the unified data structure content or a default data format specific image to be used in hit lists or other areas to provide a first visual impression of the unified data structure content.

In some implementations, the different data types can be analyses, raw data acquired from laboratory instruments, reports, and/or methods (e.g., analysis methods, signature methods, etc.).

In certain implementations, the unified data structures are generic and do not contain information about any applications which work on the associated data.

Another aspect of the invention features a computer-readable medium having stored thereon a data structure. The data structure can include primary data elements and supporting data elements. The primary data elements can include an admin data element comprising basic fields, an instance data element comprising data specific to the unified data structure in XML form, a stream element comprising maintenance information concerning stored data streams, stream data comprising content of data streams, and a signature data element comprising electronic/digital signatures applied on the unified data structure. The supporting data elements can include a catalog comprising redundant searchable data extracted from the instance data element, comments comprising file attachments, hyperlinks to external data sources and/or to other ones of the unified data structures, search keywords, and thumbnails comprising renditions of the unified data structure content or a default data format specific image to be used in hit lists or other areas to provide a first visual impression of the unified data structure content.

Other aspects, features, and advantages are in the description, drawings, and claims.

### BRIEF DESCRIPTION OF THE DRAWINGS

FIG. 1 is a schematic view of a scientific data information system.
FIG. 2 is a schematic view of a workstation model including the scientific data information system of FIG. 1.
FIG. 3 is a computer network including the scientific data information system of FIG. 1.
FIG. 4 is a schematic illustration of a unified data structure.

Like reference numbers indicate like elements.

### DETAILED DESCRIPTION

Within a scientific data information system many different data types can be stored in a generic, unified data structure. As a result, a pool of 'data' can be created that can potentially be shared by many different applications, thereby allowing data to be processed more efficiently. Utilizing such a unified data structure can also help to provide data sharing between system users, thereby allowing individuals across a science-based organization to access data more efficiently.

### I. System Overview

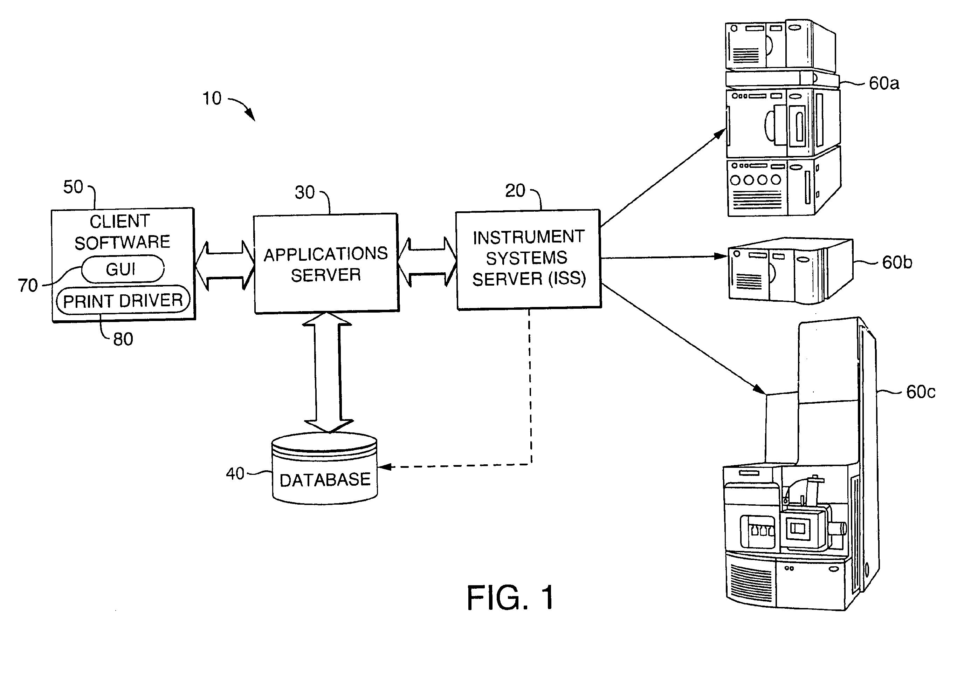

FIG. 1 illustrates a scientific data information system 10 that provides for acquisition of chromatography and mass spectrometry data (within a single software environment), instrument control, data processing and mining, and reporting, with GxP laboratory compatibility that allows for deployment throughout a science-driven organization. The scientific data information system includes an instrument systems server (ISS) 20, an application server 30, a database 40, and client software 50.

The ISS 20 is in communication with laboratory instruments 60a-c and includes computer-executable instructions for handling instrument control and data acquisition. The laboratory instruments 60a-c can include, for example, chromatographic instruments 60a, detectors 60b (e.g., UV detectors), and mass spectrometers 60c. Exemplary chromatographic instruments include ACQUITY UPLC® H-Class Bio System, available from Waters Corporation of Milford, Massachusetts. Exemplary detectors include the ACQUITY UPLC® Tunable UV (TUV) Detector, available from Waters Corporation. Exemplary mass spectrometers include the Xevo® G2 Tof mass spectrometer, available from Waters Corporation.

Generally, the ISS 20 performs two functions (i) system coordination, and (ii) data buffering. The ISS 20 can coordinate operation of the instruments based on information (e.g., instrument method and sample set information) received from the application server 30, which allows the ISS 20 to set up the instruments and start an acquisition. Instrument methods include instructions for controlling operating parameters of one of an attached instrument. The ISS 20 also provides status information back to the application server 30 during a run.

During data acquisition, the acquired data (e.g., chromatographic and/or mass spectrometry (MS) data) is received by the ISS 20 from the laboratory instruments 60a-c in native instrument format. The data is then translated by the ISS 20 to unified datafile format. Converted data is stored by the ISS 20 in a secure file buffer, and a rolling SHA1 checksum, incremented with each data packet, ensures fidelity and security of data. A final checksum is calculated upon acquisition completion and the raw data file is delivered to the database 40 where it is stored and locked.

The application server 30 is in communication with the ISS 20, the database 40, and the client software 50. The application server 30 is a collection of software that handles the business logic (i.e., the functions that the associated software performs on the data). The application server 30 retrieves data (from the database 40), processes and presents data to a graphical user interface 70, processes input data (e.g., from the graphical user interface 70), and sends method (e.g., instrument method) and sample set information to the ISS 20 to set up the instruments and start an acquisition. In addition, the application server 30 and the ISS 20 communicate on a host of configuration and setup issues, such as downloading instrument drivers to the ISS 20, configuring instrument systems, etc. This is driven from the application server 30 to the ISS 20.

The application server 30 includes computer-executable instructions for providing administrative and information access controls, as well as for providing audit trails of user activities and record alterations in accordance with GxP compliance requirements. Each unique user has tunable information access (method, data, results, etc.) limitations and activity restrictions dictated by their assigned roles. Users can include administrators, managers, analysts, and principal scientists.

The application server 30 also includes computer-executable instructions for performing data processing, e.g., to reduce the raw data acquired from the laboratory instruments 60a-c into usable reports. Data (e.g., chromatographic data, spectral (MS) data, and bioinformatics) can be processed, by the application server 30, while acquisition is ongoing if processing parameters are specified within a method (e.g., an analysis method). Analysis methods can describe expected system hardware configurations, separation and MS parameters, spectral processing and bioinformatics analysis tasks, and links to automated reporting templates, which can be used to automate production of standardized reports. Following data collection, a copy of the corresponding analysis method can be stored as part of each results set. The application server 30 also relays information, e.g., method and sample set information, to the ISS 20, which then controls the instruments 60a-c according to the information provided.

The application server 30 can also include a search engine, which can allow users to search the contents of the database 40.

The database 40 is a relational database. Relational databases enable real-time acquisition, processing, and management of large volumes of data from multiple sources. This can allow for simultaneous processing, review, and acquisition of data and parallel data acquisition from multiple instrument systems. Suitable relational databases include the Oracle® 11gR2 relational database, available from Oracle Corporation of Redwood Shores, California. Information stored in the database 40 can include many different data types (e.g., analyses, raw data, reports, historical data, methods, etc.) which may be stored in a unified data structure (also referred to as a "Content Item"). The use of a unified data structure can help to enable all laboratory functions to work with a common backbone of analytical information. This data standardization can also help to increase the exchange of information within an organization (e.g., between product development and product manufacturing), and, in some cases, even globally (e.g., with third-party partners).

The client software 50 includes computer-executable instructions (e.g., a Windows Presentation Foundation (or WPF) piece of code) for providing the graphical user interface 70 which displays data and allows the user to interact with the data (via the application server 30). Users can use the graphical user interface to select/define methods (e.g., instrument methods, analysis methods, capture methods, signature methods), to process data, and electronically review and sign reports. When the user decides to process data, instructions are sent the application server 30, where the processing takes place.

The client software 50 also includes a print driver 80 for performing print capture. The software generates a print file and moves the file through the application server 30 and stores it within the database 40. The print capture feature can be used for brining in auxiliary information into the system.

The client software 50 can also include a browser that can communicate with the search engine of the application server 30 to allow the user to perform text searches for data within the database 40.

These software components (also known as computer programs, programs, software, software applications or code) include machine instructions for a programmable processor. As used herein, the terms machine-readable medium and computer-readable medium refer to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term machine-readable signal refers to any signal used to provide machine instructions and/or data to a programmable processor.

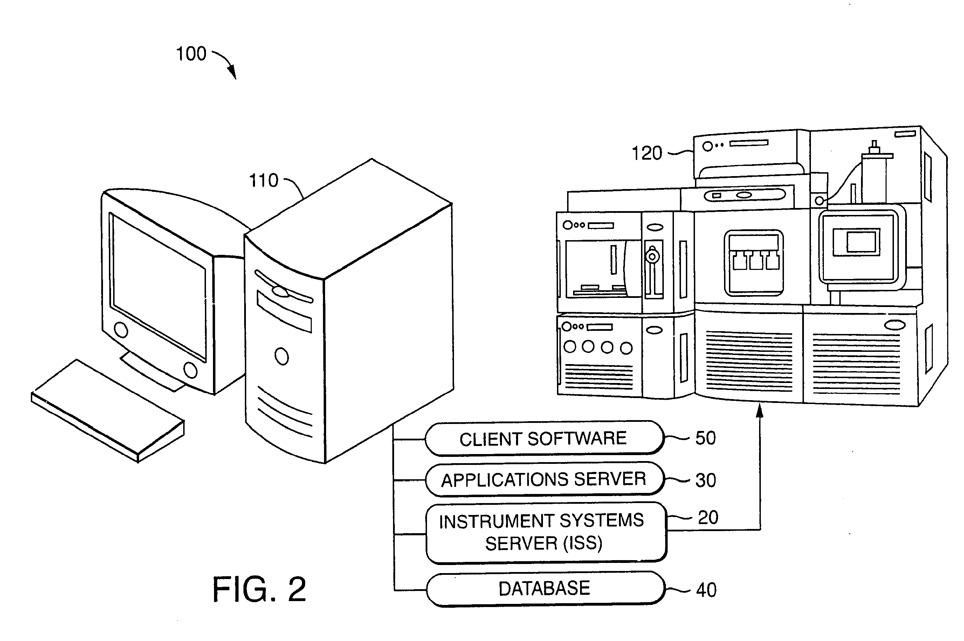

The scientific data information system 10 can be implemented in a variety of configurations, from an individual workstation model, to a network model, such as a laboratory-based workgroup or networked enterprise environment. In a workstation model, one computer handles both the low-level (e.g., database management and instrument control) and high level (e.g., data processing and user interface) functions. For example, FIG. 2 illustrates a workstation 100 in which the client software 50, the application server 30, the ISS 20, and the database 40 all reside on a single computer 110. A suitable computer 110 for the workstation 100 is a Lenovo D20 Workstation configured with dual Xeon E5504 2.0 GHz processors, 8 GB RAM, Nvidia Quadro FX 18000 graphics card under the Windows 7 64-bit operating system. The workstation 100 can also include a key board and a pointing device (e.g., a mouse or a trackball) for receiving user input, and a display device for displaying the graphical user interface 70. The workstation 100 can be physically located next to a laboratory instrument 120, such as an liquid chromatography (LC)/mass spectrometry (MS) system.

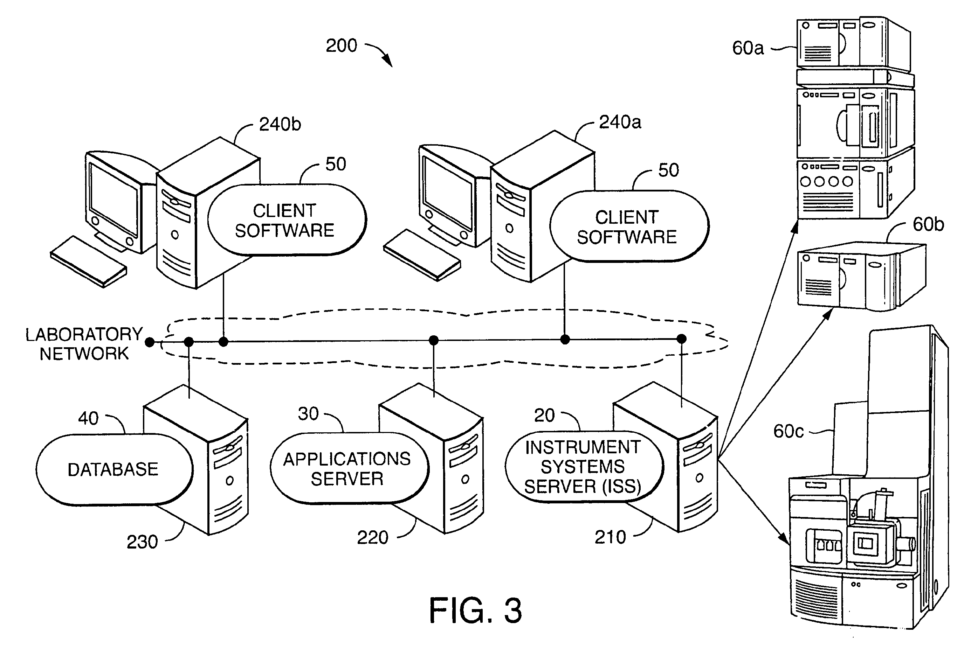

In a network model, the user interface, data processing, database management and instrument control functions can be split across separate computers which may be connected over a computer network, e.g., such as a local area network (LAN), wide area network (WAN), the Internet, or a combination thereof. For example, FIG. 3 illustrates a network 200 that includes an information system computer 210, an application server computer 220, a database management computer 230 and one or more client PC's 240a, 240b on which the ISS 20, the application server 30, the database 40, and the client software 50 reside, respectively. In some cases, such as in a laboratory-based workgroup, the application server and the database may reside on a common computer.

Each of the network computers can include a processor for processing instructions (e.g., stored in memory or on a storage device) for execution within the corresponding computer; a memory (e.g., volatile memory, non-volatile memory, a magnetic disk, an optical disk, etc.) for storing information within the corresponding computer; and a storage device (e.g., a floppy disk device, a hard disk device, an optical disk device, or a tape device, a flash memory, etc.) for providing mass storage for the corresponding computer.

### II. Content Items

As mentioned above, data is stored within the database 40 in a unified data structure ("Content Item"). With a unified data structure, many different data types (e.g., analyses, raw data, reports, methods, etc.) can be stored and managed in a generic way. Using this approach, a potentially unlimited number of data types can be supported with the need for type specific functionality.

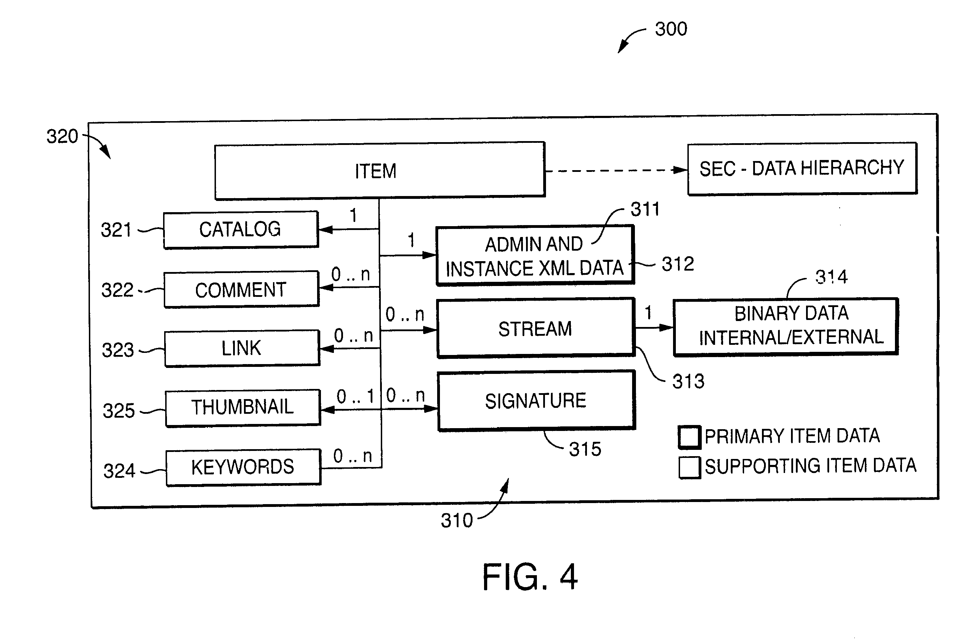

The "content item" data structure is generic and does not contain information about the application specific use of the maintained data. The content item is a composed data object and contains some header information, streams (unstructured data/files), structured XML based data and signatures. Text and XML data of the content item can be stored as Unicode data. FIG. 4 illustrates a high level overview of a content item 300. Each content item 300 includes primary data elements 310 and supporting data elements 320.

The primary data elements 310 include an admin data element 311, an instance data element 312, a stream element 313, stream data 314, and a signature data element 315. The admin data element 311 contains basic fields that are available for all items. "Fields" refer to metadata that is used to describe or provide information about the corresponding content item. The fields can include standard fields for every content item, which cannot be changed by the user, and custom fields, which are defined by and can be changed by the user. The instance data element 312 contains the item specific data in XML form (structured according to a specific XML schema). The stream element 313 contains maintenance information about the stored streams (system internal data such as StreamID, message digest, size, etc.). The stream data 314 contains the content (file) of the dependent streams. The signature data element 315 contains the electronic/digital signatures applied on the content item.

The supporting data elements 320 include a catalog 321, comments 322, links 323, keywords 324, and thumbnails 325. The catalog 321 contains redundant searchable data extracted from the instance data element 312. The comments 322 contain file attachments. The links 323 provide hyperlinks to external data sources and/or to other content items. The keywords 324 provide the ability to add keywords to the content item for search. The thumbnails 325 contain renditions of the item content or a default data format specific image to be used in hit lists or other areas to give the user a first visual impression of the item content.

Although a few implementations have been described in detail above, other implementations are within the scope of the following claims.

## Claims

1. A computer-implemented method, comprising
storing a plurality unified data structures within a data base of a scientific data information system, wherein the unified data structures comprise information corresponding to different data types.

2. The method of claim 1, wherein each unified data structure comprises header information, data streams, structured XML based data and signatures.

3. The method of claim 1 or claim 2, in particular of claim 1, wherein each unified data structure comprises:
A.) primary data elements comprising:
i.) an admin data element comprising basic fields,
ii.) an instance data element comprising data specific to the unified data structure in XML form,
iii.) a stream element comprising maintenance information concerning stored data streams,
iv.) stream data comprising content of data streams, and
v.) a signature data element comprising electronic/digital signatures applied on the unified data structure; and
B.) supporting data elements comprising:
i.) a catalog comprising redundant searchable data extracted from the instance data element,
ii.) comments comprising file attachments,
iii.) hyperlinks to external data sources and/or to other ones of the unified data structures,
iv.) keywords for search, and
v.) thumbnails comprising renditions of the unified data structure content or a default data format specific image to be used in hit lists or other areas to provide a first visual impression of the unified data structure content.

4. The method of any one of claims 1 to 3, in particular of claim 1, wherein the different data types are selected from the group consisting of analyses, raw data acquired from laboratory instruments, reports, and methods.

5. The method of any one of claims 1 to 4, in particular of claim 1, wherein the unified data structures are generic and do not contain information about any applications which work on the associated data.

6. A computer readable medium having stored thereon a data structure, the data structure comprising:
A.) primary data elements comprising:
i.) an admin data element comprising basic fields,
ii.) an instance data element comprising data specific to the unified data structure in XML form,
iii.) a stream element comprising maintenance information concerning stored data streams,
iv.) stream data comprising content of data streams, and
v.) a signature data element comprising electronic/digital signatures applied on the unified data structure; and
B.) supporting data elements comprising:
i.) a catalog comprising redundant searchable data extracted from the instance data element,
ii.) comments comprising file attachments,
iii.) hyperlinks to external data sources and/or to other ones of the unified data structures,
iv.) search keywords, and
v.) thumbnails comprising renditions of the unified data structure content or a default data format specific image to be used in hit lists or other areas to provide a first visual impression of the unified data structure content.
